(19) Europäisches Patentamt
European Patent Office
Office européen des brevets

(11) **EP 0 869 587 A2**

(12) **EUROPÄISCHE PATENTANMELDUNG**

(43) Veröffentlichungstag:
**07.10.1998 Patentblatt 1998/41**

(51) Int. Cl.$^6$: **H01R 23/00**

(21) Anmeldenummer: **98102652.9**

(22) Anmeldetag: **17.02.1998**

(84) Benannte Vertragsstaaten:
**AT BE CH DE DK ES FI FR GB GR IE IT LI LU MC NL PT SE**
Benannte Erstreckungsstaaten:
**AL LT LV MK RO SI**

(30) Priorität: **05.03.1997 DE 19708798**

(71) Anmelder:
**KRONE Aktiengesellschaft**
**14167 Berlin (DE)**

(72) Erfinder:
**Gwiazdowski, Michael, Dipl.-Ing.**
**10825 Berlin (DE)**

(54) **Anordnung von Kontaktpaaren zur Kompensation des Nahnebensprechens**

(57) Die Erfindung betrifft eine Anordnung von mindestens zwei Kontaktpaaren (1, 2; 3, 4) zur Kompensation des Nahnebensprechens, bei der von einem Kontaktbereich (5) ein oder beide Kontakte (1, 2 bzw. 3, 4) eines Kontaktpaares (1, 2; 3, 4) derart einfach oder mehrfach abgewinkelt ausgebildet sind, so daß die Kontakte (1,2 bzw. 3,4) danach wieder parallel verlaufen und die Kontakte (1, 3 bzw. 2, 4) verschiedener Kontaktpaare derart zueinander beabstandet sind, so daß ein zum Kontaktbereich (5) gegenphasiges Übersprechen erzeugt wird.

FIG.1

EP 0 869 587 A2

**Beschreibung**

Die Erfindung betrifft eine Anordnung von Kontaktpaaren Zur Kompensation des Nahnebensprechens gemäß dem Oberbegriff des Anspruches 1.

Aufgrund einer magnetischen und elektrischen Kopplung zwischen zwei Kontaktpaaren induziert ein Kontaktpaar in benachbarten Kontaktpaaren einen Strom bzw. influenziert elektrische Ladungen, so daß es zu einem Übersprechen kommt. Zur Vermeidung des Nahnebensprechens können die Kontaktpaare sehr weit voneinander entfernt angeordnet oder zwischen den Kontaktpaaren eine Abschirmung angeordnet werden. Müssen die Kontaktpaare jedoch konstruktiv sehr dicht beieinander angeordnet werden, sind die zuvor beschriebenen Maßnahmen nicht durchführbar und das Nahnebensprechen muß kompensiert werden.

Eine bekannte Methode zur Reduzierung des Nahnebensprechens bei Steckern ist die Kompensation hinter den Steckkontakten. Dies geschieht durch eine gezielte zusätzliche Kopplung, die aber im Gegensatz zur Kopplung im Kontaktbereich eine gegenphasige Komponente darstellt und somit das Gesamtnebensprechen reduziert. Hierzu wird gezielt ein Leitungspaar hinter dem Steckkontakt gekreuzt, so daß hinter dem Kreuzungspunkt eine zusätzliche gegenphasige Kopplung erfolgt. Alternativ kann, wie aus der EP 0 525 703 bekannt, die Kompensation durch zusätzliche diskrete Kondensatoren hinter dem Steckkontakt erfolgen. Nachteilig bei dieser Kompensationsmethode ist, daß die Kontaktlänge bzw. der Abstand zwischen Kontaktmitte und dem Ort der Kompensation, dem Umfang der Kompensation eine physikalische Grenze für hohe Frequenzen setzen, so daß diese Art der Kompensation für höhere Übertragungsraten nur bedingt anwendbar ist.

Der Erfindung liegt daher das technische Problem zugrunde, eine Anordnung von Kontaktpaaren zu schaffen, bei denen eine Kompensation des Nahnebensprechens auch bei höheren Übertragungsraten gewährleistet ist. Ein weiteres technisches Problem der Erfindung ist, eine Anordnung von Kontaktpaaren zu schaffen, die zusätzlich kompatibel zu den bisher verwendeten Steckverbindern ist.

Die Lösung des technischen Problems ergibt sich durch die Merkmale des Patentanspruchs 1. Dadurch, daß von einem Kontaktbereich eine oder beide Kontakte eines Kontaktpaares derart einfach oder mehrfach abgewinkelt ausgebildet sind, so daß die Kontakte danach wieder parallel verlaufen und der Abstand zwischen den Kontakten verschiedener Kontaktpaare derart ausgebildet ist, daß ein zum Übersprechen im Kontaktbereich gegenphasiges Übersprechen erzeugt wird, die sich im Idealfall gerade kompensieren, wird auch bei höheren Übertragungsfrequenzen eine ausreichende Übersprechdämpfung erreicht. Dadurch wird die Kompensation direkt in den Kontakt integriert, ohne die einzelnen Kontakte physikalisch zu kreuzen, wodurch die Grenze der Kompensationswirkung zu höheren Frequenzen hin verschoben wird. Die konkrete Ausgestaltung der Kontakte im Kompensationsbereich ist stark davon abhängig, wie die Kontakte der einzelnen Kontaktpaare im Kontaktbereich zu einander ausgebildet sind, beispielsweise nebeneinander oder verschachtelt. Gemeinsam ist jedoch, daß es bei einer Verschiebung der Kontaktpaare zueinander immer eine Position gibt, bei der eine völlige Entkopplung und über die entkoppelte Position hinaus ein gegenphasiges Übersprechen auftritt. Durch die Abwinkelung der Kontakte werden die Kontakte genau in diese Position geführt. Weitere vorteilhafte Ausgestaltungen der Erfindung ergeben sich aus den Unteransprüchen.

Sind die Kontakte eines Kontaktpaare parallel und nebeneinander im Kontaktbereich angeordnet, so wird das gegenphasige Übersprechen gerade dann erzeugt, wenn der Abstand zwischen den Kontakten verschiedener Kontaktpaare kleiner ist als der Abstand zwischen den Kontakten eines Kontaktpaares, wohingegen bei symmetrisch verschachtelten Kontaktpaaren dies dann auftritt, wenn die durch die Kontakte eines Kontaktpaares aufgespannten Ebenen einen Winkel $\alpha < 90°$ (bei 90° ist gerade die entkoppelte Lage) einschließen.

Durch die zumindest teilweise abgeflachte Ausbildung der Kontakte wird die Kapazität zwischen den Kontakten erhöht, so daß die Kompensation sich erhöht, da dies wie die Vergrößerung der Flache einer Kondensatorplatte wirkt. In einer weiteren bevorzugten Ausführungsform wird jeweils ein Kontakt eines Kontaktpaares im Anschluß an die gleichgerichtete Weiterführung wieder zu seinem zugehörigen Kontakt hin abgewinkelt oder verdreht, bis der geringere Abstand wieder ein Übersprechen erzeugt, das gleichphasig zu dem Übersprechen im Kontaktbereich ist. Bei dieser Ausführungsform wird dann das gegenphasige Übersprechen gerade so gewählt, daß dieses gleich der Summe des Übersprechens im Kontaktbereich und dem zusätzlichen Übersprechen ist, wobei das zusätzlich erzeugte gleichphasige Übersprechen vorzugsweise genauso groß gewählt wird wie das Übersprechen im Kontaktbereich. Zur Begrenzung des Kompensationsbereiches in Richtung zu einem zu kontaktierenden Anschlußkabel können die Kontakte entweder in einer entkoppelten Lage weitergeführt oder zwischen den Kontaktpaaren eine Schirmung angeordnet werden.

Die Erfindung wird nachfolgend anhand eines bevorzugten Ausführungsbeispieles erläutert. Die Fig. zeigen:

Fig. 1    eine perspektivische Darstellung von zwei Kontaktpaaren mit einer gegenphasigen Kompensation,

Fig. 2    eine weitere Anordnung von zwei Kontaktpaaren mit einer gegenphasigen Kompensation in perspektivischer Darstellung,

Fig. 3    eine weitere Anordnung von zwei Kontaktpaaren mit einer gegenphasigen Kompensation in perspektivischer Darstellung,

Fig. 4    eine weitere Anordnung von zwei Kontaktpaaren mit einer gegenphasigen Kompensation in perspektivischer Darstellung,

Fig. 5    eine perspektivische Darstellung von zwei
Kontaktpaaren mit einer gegenphasigen
und einer gleichphasigen Kompensation,

Fig. 6    die Pin-Belegung eines RJ-45-Steckverbinders (Stand der Technik),

Fig. 7a   zwei verschachtelte Kontaktpaare mit Übersprechen,

Fig. 7b   Anordnung zur Kompensation des Übersprechens bei einer Anordnung gemäß
Fig.7a,

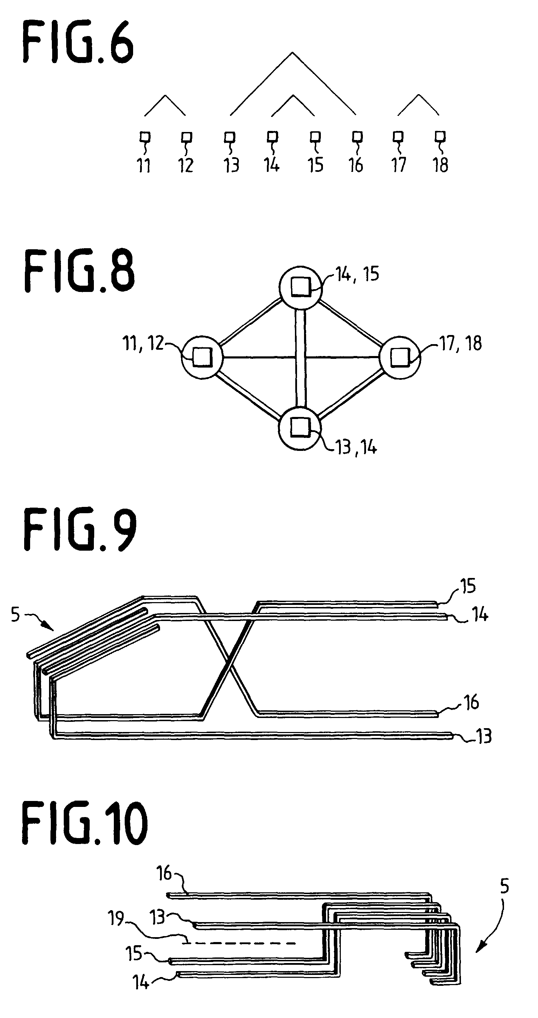

Fig. 8    eine schematische Darstellung der Kopplungsverhältnisse einer Anordnung mit 4
Kontaktpaaren mit teilweiser Verschachtelung,

Fig. 9    eine Anordnung der zwei verschachtelten
Kontaktpaare in einer Buchse für hohe
Übertragungsfrequenzen bei gleichzeitiger
Kompatibilität für Stecker gemäß dem
Stand der Technik,

Fig. 10   eine Anordnung der zwei verschachtelten
Kontaktpaare in einem Stecker für hohe
Übertragungsfrequenzen,

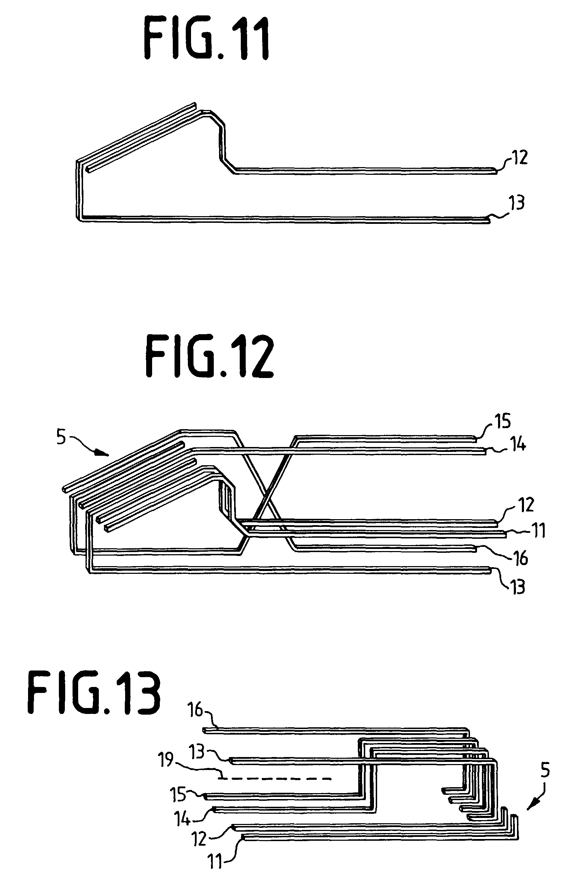

Fig. 11   eine Anordnung eines Kontaktes eines Kontaktpaares mit zusammenliegenden Kontakten zu einem benachbarten Kontakt
eines Kontaktpaares mit verschachtelten
Kontakten,

Fig. 12   eine Anordnung von drei Kontaktpaaren in
einer Buchse für hohe Übertragungsfrequenzen, wobei zwei Kontaktpaare ineinander verschachtelt sind,

Fig. 13   eine Anordnung von drei Kontaktpaaren in
einem Stecker für hohe Übertragungsfrequenzen, wobei zwei Kontaktpaare ineinander verschachtelt sind,

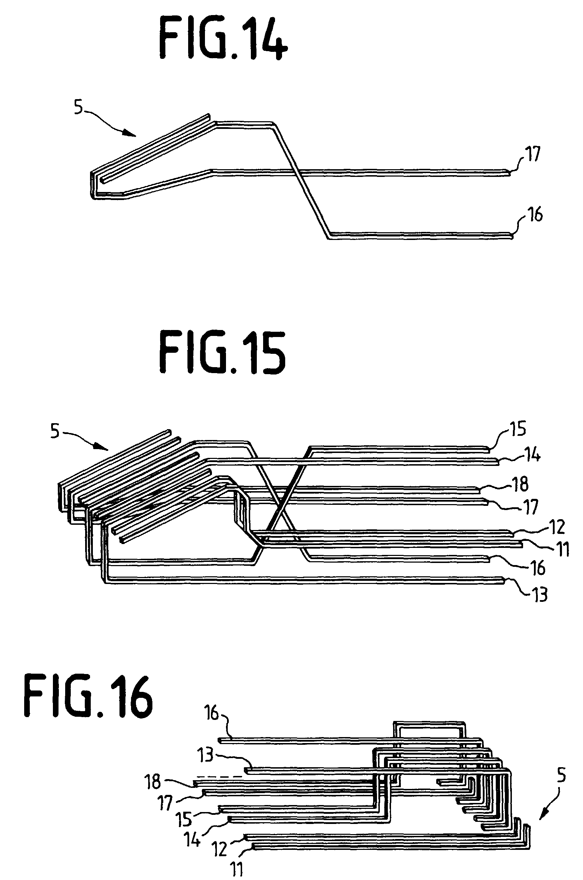

Fig. 14   eine Anordnung eines Kontaktes eines Kontaktpaares mit zusammenliegenden Kontakten zu einem benachbarten Kontakt
eines Kontaktpaares mit verschachtelten
Kontakten,

Fig. 15   eine Kontaktanordnung von vier Kontaktpaaren in einer Buchse für hohe Übertragungsfrequenzen und voller Kompatibilität
zu bekannten RJ45-Steckern,

Fig. 16   eine Kontaktanordnung von vier Kontaktpaaren in einem Stecker für eine Buchse
gemäß Fig.15,

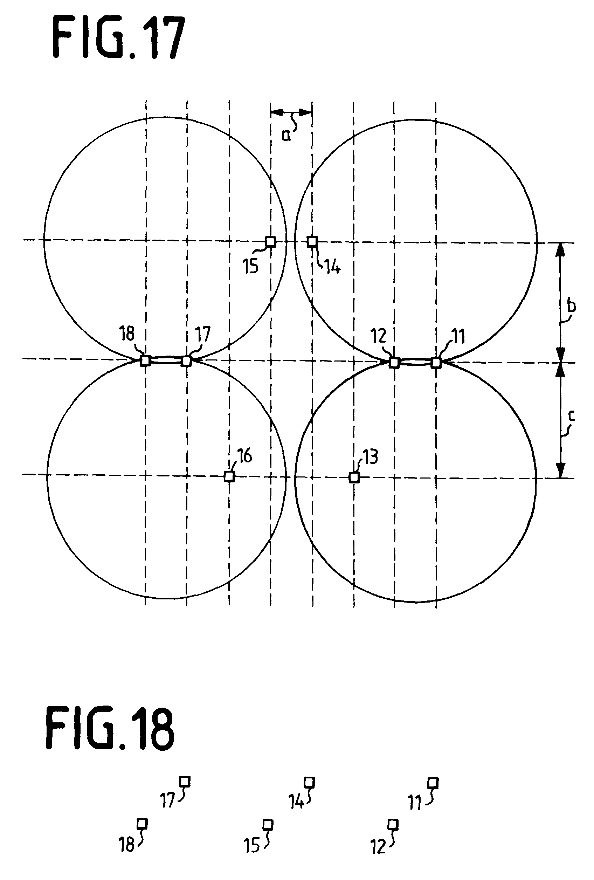

Fig. 17   eine Anordnung der vier Kontaktpaare im
Anschlußbereich der Buchse gemäß Fig.15
und

Fig. 18   eine Anordnung dreier unterhalb eines
Schirmbleches angeordneter Kontaktpaare
im Anschlußbereich eines Steckers gemäß
Fig.16.

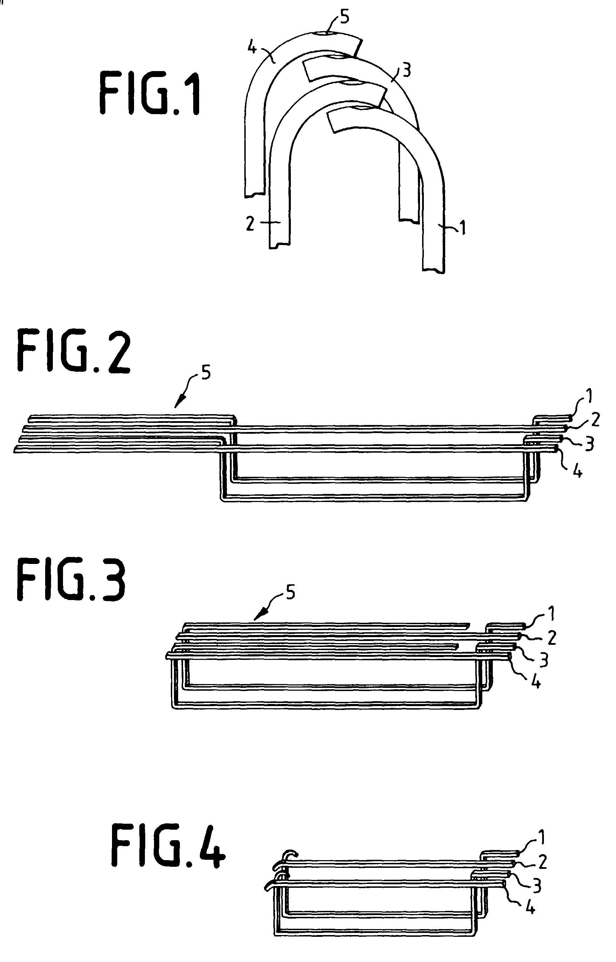

Die Fig. 1 zeigt eine perspektivische Darstellung einer Anordnung von zwei Kontaktpaaren 1, 2 und 3, 4, die jeweils mit einem Kontaktbereich 5 zur Kontaktierung mit einem Gegenstück ausgebildet sind. Sind die Kontaktpaare 1, 2 und 3, 4 in einem Stecker angeordnet, so wäre das Gegenstück z.B. eine Buchse. Dabei werden jeweils die beiden zu einem Kontaktpaar 1, 2; 3, 4 gehörenden Kontakte 1, 2 bzw. 3, 4 zuerst im Anschluß an den Kontaktbereich 5 in entgegengesetzte Richtungen weitergeführt und daran anschließend wieder in gleicher Richtung gedreht. Dadurch ist der Abstand zwischen den Kontakten 1, 3 bzw. 2, 4 geringer als der Abstand zwischen den Kontakten 1 und 2 bzw. 3 und 4, wodurch das Übersprechen in diesem Bereich eine entgegengesetzte Polarität zu dem Übersprechen im Kontaktbereich 5 aufweist, wo das Kontaktpaar 1, 2 in dem Kontaktpaar 3, 4 Ströme induziert bzw. Ladungen influenziert. Durch das gegenphasige Übersprechen wird somit das Nahnebensprechen im Kontaktbereich 5 alleine oder zusammen mit einem möglichen Übersprechen im Gegenstück gezielt kompensiert. Diese Kompensation kann durch eine abgeflachte Ausbildung der Kontakte 1, 2, 3, 4 verstärkt werden, da durch die Vergrößerung der sich jeweils bei den Kontakten 1, 3 bzw. 2, 4 gegenüberliegenden Flächen proportional die Kapazität zwischen den jeweiligen Kontakten 1, 3 bzw. 2, 4 erhöht wird. Das Maß für das gegenphasige Übersprechen muß zur Erreichung einer vollständigen Kompensation genau dem Nahnebensprechen im Kontaktbereich 5 entsprechen. Daher kann der Kompensationsbereich in Richtung eines möglichen Anschlußkabels durch eine Schirmung zwischen den Kontaktpaaren 1, 2; 3, 4 begrenzt werden. Alternativ können die Kontakte 1, 2, 3, 4 in einer entkoppelten Lage weitergeführt werden.

In der Fig.2 ist eine alternative Anordnung mit zwei Kontaktpaaren 1, 2; 3, 4 dargestellt, bei der die Kontakte 1, 3 vom Kontaktbereich 5 aus zunächst um 90° zu ihren zugehörigen Kontakten 2, 4 abgewinkelt sind und daran anschließend erneut um 90° abgewinkelt werden, und zwar derart, daß die Kontakte 1, 3 immer parallel zueinander angeordnet sind, und alle Kontakte 1, 2, 3, 4 im Kompensationsbereich zueinander parallel angeordnet sind. Im Kompensationsbereich ist dann der Abstand zwischen den Kontakten 1 und 3 bzw. 2 und 4 kleiner als zwischen den Kontakten 1, 2 bzw. 3, 4 eines zugehörigen Kontaktpaares 1,2; 3, 4. Zur Beendigung des Kompensationsbereiches werden dann die Kontakte 1, 3 zweifach wieder abgewinkelt, so daß die Kontakte 1, 2, 3, 4 anschließend wieder entsprechend dem Kontaktbereich 5 zueinander angeordnet sind oder wie oben ausgeführt, beispielsweise in einer entkoppelten Lage weitergeführt werden.

In Fig. 3 ist eine weitere alternative Ausführungsform dargestellt, bei der die Kontakte 1, 3 schleifenförmig wieder zurückgeführt werden. In Fig.4 ist eine Ausführungsform dargestellt, die eine Kombination der Ausführungsformen gemäß Fig. 1 und 3 darstellt.

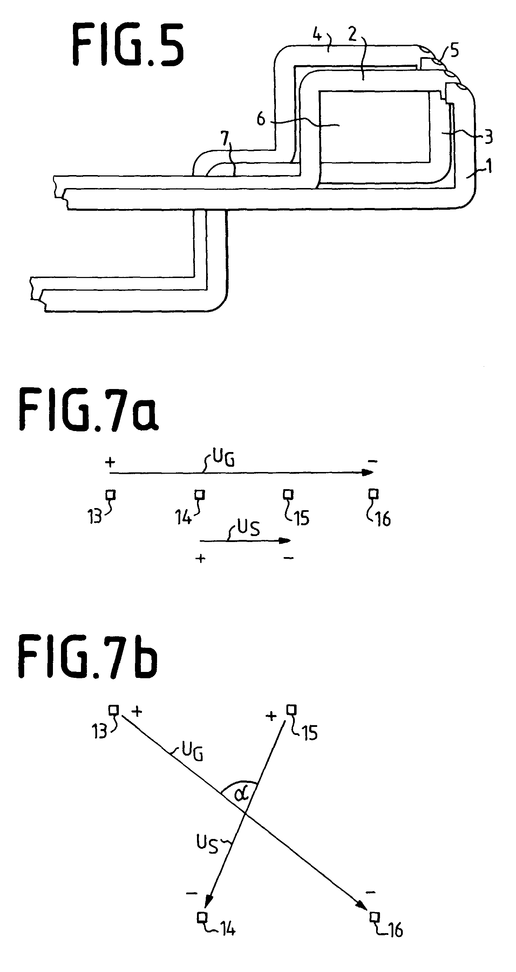

In der Fig.5 ist eine Anordnung von Kontaktpaaren 1, 2; 3, 4 dargestellt, bei der sowohl eine gegenphasige als auch eine gleichphasige Kompensation des Nahnebensprechens im Kontaktbereich 5 bewirkt wird. Die gegenphasige Kompensation wird dabei durch eine entsprechende Kontaktausbildung gemäß Fig.1 erreicht, wobei in diesem Ausführungsbeispiel die Kontakte 1, 2, 3, 4 abgewinkelt ausgebildet sind. Im Anschluß an diesen ersten Kompensationsbereich 6 werden die Kontakte 2, 4 zu ihren zugehörigen Kontakten 1, 3 hin nochmals abgewinkelt und weitergeführt. Im Anschluß daran sind die Kontakte 2, 4 erneut abgewinkelt, so daß alle Kontakte 1, 2, 3, 4 parallel zueinander verlaufen. Dadurch induzieren bzw. influenzieren die Kontaktpaare 1,2; 3, 4 jeweils Ströme bzw. Ladungen im anderen Kontaktpaar 3,4; 1, 2. Dieses erzeugte Übersprechen ist wieder gleichphasig zu dem Übersprechen in dem Kontaktbereich 5. Der Bereich der parallelen Führung der Kontakte 1, 2, 3, 4 definiert somit einen zweiten Kompensationsbereich 7, der die Wirkung des Kompensationsbereiches 6 teilweise wieder aufhebt. Der Grundgedanke dabei ist, zuerst das vorhandene Übersprechen zunächst überzukompensieren und daran anschließend die Überkompensation zu kompensieren, was zu einer stärkeren Übersprechdämpfung führt, so daß die Anordnung bei noch höheren Frequenzen betrieben werden kann. Vorzugsweise wird das Übersprechen im Kompensationsbereich 7 genauso groß gewählt wie das Übersprechen im Kontaktbereich 5. Zur Begrenzung des Kompensationsbereiches 7 wird das Kontaktpaar 3, 4 nochmals zweifach abgewinkelt ausgebildet, so daß die beiden Kontaktpaare 1,2 bzw.3, 4 parallel in einer entkoppelten Lage zu entsprechenden Anschlußkabeln geführt werden.

Die vorangegangenen Ausführungsformen gemäß den Fig. 1-5 sind prinzipiell für mehrpolige Steckverbindungen geeignet. Um jedoch eine Kompatibilität zu bereits existierenden Steckverbindungen zu erreichen, insbesondere bezüglich der mechanischen Abmessungen und der Pin-Belegung, sind zusätzliche Maßnahmen notwendig. Dazu ist beispielsweise in Fig.6 die Pin-Belegung für einen RJ-45-Stecker dargestellt. Der RJ-45 Stecker ist für symmetrische Datenkabel der weitverbreiteste Steckverbinder, bei dem in der Kathegorie 5 mit entsprechender Buchse zwischen allen vier Leiterpaaren eine Übersprechdämpfung von >40 dB bei 100 MHz Übertragungsfrequenz erreichbar ist. Wie aus der Fig.6 ersichtlich, liegen die zugehörigen Kontakte eines Kontaktpaares nicht immer unmittelbar nebeneinander, sondern die beiden mittleren Kontaktpaare 13, 16 und 14, 15 sind verschachelt, was ein besonders starkes Übersprechen zur Folge hat.

In der Fig.7a ist die verschachelte Anordnung von Kontaktpaaren 13, 16; 14, 15 mit einer Erregerspannung $U_G$ an dem äußeren Kontaktpaar 13, 16 und einer influenzierten Übersprechspannung $U_S$ am inneren Kontakpaar 14, 15 dargestellt. Aufgrund der geringen Abstände zwischen den Kontakten 13 und 14 bzw. 15 und 16 hat die Übersprechspannung das gleiche Vorzeichen wie die Erregerspannung $U_S$. Gemäß den vorangegangenen Überlegungen läßt sich eine Position für die Kontakte 14 und 16 finden, wo eine völlige Entkopplung zwischen den Kontaktpaaren 13, 16; 14, 15 erreicht wird, nämlich wenn die beiden durch die Kontaktpaare 13, 16; 14, 15 aufgespannten Ebenen aufeinander senkrecht stehen. Verschiebt man die Kontakte 14, 16 weiter, so wechselt die Übersprechspannung $U_S$ ihr Vorzeichen, was für die zuvor beschriebene Kompensation ausgenutzt werden kann und in Fig.7b dargestellt ist. Bei einem RJ45-Steckverbinder liegt nun jedoch ein Mischverhältnis vor, d.h. teilweise liegen die Kontakte eines Kontaktpaares nebeneinander und teilweise sind diese ineinander verschachtelt. Es muß daher eine Kontaktanordnung geschaffen werden, bei der gleichzeitig alle vier Kontaktpaare voneinander entkoppelt sind. Bei vier Kontaktpaaren gibt es sechs Kopplungen zwischen den Kontaktpaaren, deren Stärke durch die Strichdicke in Fig.8 dargestellt ist.

Nachfolgend wird die Ausbildung einer zu bekannten RJ45-Steckverbindungen kompatiblen Steckverbindung sukzessive erläutert. Als erster Schritt wird das Übersprechen generell durch konstruktive Änderungen so weit wie möglich reduziert, indem die Kontakte in der Buchse nur im Kontaktbereich zum Stecker und im Bereich erforderlicher Führungen parallel verlaufen. Weiterhin werden die großen Kontaktflächen im Stecker durch kleine Kontakte ersetzt. Bedingt durch die teilweise verschachtelte Anordnung der Kontaktpaare läßt sich jedoch eine gewünschte Übersprechdämpfung von 50 dB bei 300 MHz nicht für alle Kombinationen erreichen, so daß die zuvor beschriebenen Kompensationsmaßnahmen zur Anwendung kommen müssen. Unter Kompatibiltät ist neben der identischen Pin-Belegung und den gleichen geometrischen Abmessungen auch eine Abwärtskompatibilät der erfindungsgemäßen Buchse mit einem RJ45-Stecker gemäß dem Stand der Technik zu verstehen, d.h. die Buchse muß in Kombination mit dem bekannten Stecker die Kathegorie 5 (Übersprechdämpfung >40 dB bei 100 MHz Übertragungsfrequenz) erfüllen. Daher ist eine entsprechend große Kompensation zwischen den Kontaktpaaren 13, 16; 14, 15 in der Buchse notwendig, damit die hohen Übersprechwerte des Steckers nach dem Stand der Technik kompensiert werden können. Diese Kompensation ist größer, als für einen erfindungsgemäßen HF-Stecker notwendig wäre. Demgegenüber soll die Kompensation aber so klein wie möglich sein, um bei der Kombination von HF-Stecker und HF-Buchse möglichst hohe Übertragungsfrequenzen zu erreichen. Diese sich entgegenstehenden Anforderungen erfordern einen Kompromiß, indem die Kompensation kleiner gewählt wird als für das Übersprechen des Kathegorie 5-Steckers notwendig wäre. Dies ist auch möglich, da für Kathegorie 5 nur 40 dB bei 100 MHz Übertragungsfrequenz erforderlich sind und keine exakte Kompensation notwendig ist.

Eine mögliche Anordnung der Kontaktpaare 13, 16; 14, 15 für die Buchse ist in Fig.9 dargestellt, die im wesentlichen auf dem Prinzip gemäß Fig.3 beruht. Im Anschluß an den Kompensationsbereich werden die jeweils zusammengehörigen Kontakte 13, 16 bzw. 14, 15 zusammengeführt. Der sehr große Abstand erzeugt nur noch ein sehr geringes Übersprechen und kann bei der Konstruktion der Buchse mit in die Kompensation einbezogen werden. Die Anordnung besteht aus Kompensationsschleifen, die abwechselnd rechts und links gedreht sind. Jeder einzelne Kontakt 13-16 ist nach wie vor eine zweidimensionale Anordnung. Da die Kompensation praktisch in den Kontaktbereich integriert ist, liegt die Kompensation räumlich sehr dicht am Ort des Übersprechens und ergibt eine hohe Grenzfrequenz.

Im Kontaktbereich des zur Buchse zugehörigen HF-Steckers liegen die Kontakte 13-16 wie in der Buchse parallel und verstärken dort das Übersprechen, welches bereits im Kontaktbereich der Buchse erzeugt wird. Stecker und Buchse sind dann aufeinander abgestimmt und erzeugen ein Maximum an Übersprechdämpfung, wenn das Übersprechen von Stecker und Buchse dem Betrage gleich der Kompensation ist, die in der Buchse durch die Kompensationsschleifen erzeugt wird. Wegen der relativ großen notwendigen Kompensation in der Buchse muß das Übersprechen im HF-Stecker künstlich vergrößert werden. Dazu werden die Kontakte 13-16, wie in Fig.10 dargestellt, parallel weitergeführt. Um das Übersprechen im Stecker genau zu begrenzen, ist am Anschluß an den Kompensationsbereich eine Schirmung zwischen den beiden sehr dicht beiander angeordneten Kontaktpaaren 13, 16; 14, 15 vorgesehen, die bis in den Bereich des Kabelanschlusses reicht.

Als nächster Schritt ist zu überlegen, wie das Kontaktpaar 11, 12 in Buchse und Stecker anzuordnen sind. Kritisch ist insbesondere das Übersprechen zwischen den eng benachbarten Kontakten 12 und 13. Eine gezielte Kompensation zwischen den Kontaktpaaren 11, 12 und 13, 16 durch eine weitere geeignete Kompensationsschleife der beiden Kontakte 11, 12 ist nicht möglich, da diese Kompensationsschleife auch eine unerwünschte Kopplung zu der Kompensationsschleife der Kontakte 14, 15 zur Folge hätte. Daher werden die beiden Kontakte 12 und 13 wie aus Fig.11 ersichtlich im Kontaktbereich parallel aber gegensinnig zueinander ausgebildet, d.h. die Signalströme fließen vom Kontaktbereich in entgegengesetzte Richtungen, wodurch eine magnetische Kopplung weitgehend unterdrückt wird. Die verbleibende elektrische Kopplung ist derart gering, daß Übersprechdämpfungen > 50 dB bei 300 MHz erreichbar sind. Da keine Kompensationsschleife benötigt wird, wird der Kontakt 11 parall zu Kontakt 12 geführt, so daß sich die vorläufige Kontaktanordnung für die Buchse gemäß Fig.12 ergibt. Im Anschluß an den Kontaktbereich erfolgt die Weiterführung des Kontaktpaares 11, 12 in einer entkoppelten Lage zu den Kontaktpaaren 13, 16; 14, 15. Somit ist eine gute Entkopplung zum Kontaktpaar 13, 16 erreicht. Ungünstig ist die Form des Kontaktes 12 zu Kontakt 14, da diese wieder gleichsinnig zueinander angeordnet sind, wobei jedoch aufgrund des doppelten Abstands die Übersprechdämpfung noch ausreichend gut ist.

In der Fig.13 ist die Anordnung des Kontaktpaares 11, 12 im Stecker dargestellt. Um das Übersprechen auf die Nachbarkontakte 13-16 so gering wie möglich zu halten, werden die beiden Kontakte 11, 12 gegensinnig zu diesen nach unten geführt.

Für die Anordnung des Kontaktpaares 17, 18 ist insbesondere das Übersprechen zwischen den Kontakten 17 und 16 kritisch. Entsprechend den Ausführungen zu Kontaktpaar 11, 12 scheidet auch hier eine Kompensationsschleife in der Buchse aus, da diese ein unerwünschtes Übersprechen in dem Kontaktpaar 14, 15 zur Folge hätte. Deshalb wird gemäß Fig.14 zunächst auf eine Kompensation verzichtet und zur Vermeidung der magnetischen Induktion Kontakt 17 gegensinnig parallel zu Kontakt 16 im Kontaktbereich ausgebildet.

Da auf eine Kompensation verzichtet wurde, verläuft der Kontakt 18 parallel zu Kontakt 17, so daß sich die in Fig.15 dargestellte Kontaktanordnung für die Buchse ergibt. Im Anschluß an den Kontaktbereich wird das Kontaktpaar 17, 18 in einer zu den anderen Kontaktpaaren entkoppelten Lage weitergeführt. Da die Kompensationsschleifen der Kontaktpaare 13, 16 bzw. 14, 15 seitliche Felder erzeugen, werden die beiden Kontakte 17, 18 in diesem Bereich elektrisch und magnetisch beeinflußt. Eine Ungleichheit der Kontakte hat die gleiche Wirkung wie kleine Kompensationsschleifen und erzeugt ein entsprechendes Übersprechen.

In der Fig.16 ist die vollständige Kontaktpaaranordnung für den Stecker dargestellt. Dabei ist der Kontakt 17 wieder gegensinnig zu Kontakt 16 ausgebildet, um eine gute Entkopplung zu erreichen. Da Messungen gezeigt haben, daß zwischen den Kontaktpaaren 17, 18 und 13, 16 in der Buchse keine ausreichende Übersprechdämpfung erreicht wird, ist eine entsprechende Kompensation im Stecker notwendig. Daher verläuft Kontakt 18 gleichsinnig zu Kontakt 16 und ein Stück parallel.

Damit die erreichten Ergebnisse bezüglich der Entkopplung und Kompensation der Kontakte erhalten bleiben, muß die Weiterführung der Kontakte zum Anschlußbereich entsprechend entkoppelt weitergeführt werden Dazu besteht einerseits die Möglichkeit der Verwendung von Schirmblechen oder andererseits die Führung der Kontakte in einer entkoppelten Lage. Aufgrund der unterschiedlichen Kontaktanordnung zwischen Buchse und Stecker, stellen sich auch unterschiedliche Voraussetzungen für die Suche nach einer entkoppelten Lage.

Eine mögliche Anordnung der Kontakte 11-18 im Anschlußbereich der Buchse ist in Fig.17 dargestellt. Aufgrund des großen Abstandes zwischen den Kontaktpaaren 13, 16 und 14, 15 ist deren Übersprechen gering und bei geeigneter Auslegung der Kompensation vernachlässigbar. Die beiden äußeren Kontaktpaare 11, 12 und 17, 18 sind auf einer magnetischen Feldlinie der inneren Kontaktpaare 13, 16 und 14, 15 angeordnet, was eine völlige Entkopplung zur Folge hat. Für einen Kontaktabstand a ergeben sich für die nötige Entkopplung nach einer gewissen Rechnung zu b=2,915a und c=2,78a .

Beim Stecker wird zum Anschlußbereich hin ein Schirmblech angeordnet, wobei das Kontaktpaar 13, 16 oberhalb und die verbleibenden drei anderen Kontaktpaare unterhalb des Schirmbleches angeordnet sind. Um eine Entkopplung zwischen den Kontaktpaaren unterhalb des Schirmbleches zu gewährleisten, werden die Kontakte eines Kontaktpaares versetzt zueinander angeordnet, so daß die Kontaktpaare auf entsprechen Äquipotentiallinien der anderen Kontaktpaare liegen, was in Fig. 18 dargestellt ist.

**Patentansprüche**

1. Anordnung von mindestens zwei Kontaktpaaren, **dadurch gekennzeichnet,** daß von einem Kontaktbereich (5) ein oder beide Kontakte (1, 2 bzw. 3, 4) eines Kontaktpaares (1, 2; 3, 4) derart einfach oder mehrfach abgewinkelt ausgebildet sind, so daß die Kontakte (1,2 bzw. 3,4) danach wieder parallel verlaufen und der Abstand zwischen den Kontakten (1, 3 bzw. 2, 4) verschiedener Kontaktpaare derart ausgebildet ist, daß in diesem Bereich ein zum Kontaktbereich (5) gegenphasiges Übersprechen erzeugt wird.

2. Anordnung nach Anspruch 1, dadurch gekennzeichnet, daß die Kontakte (1, 2 bzw. 3, 4) eines Kontaktpaares (1, 2; 3, 4) im Kontaktbereich (5) symmetrisch nebeneinander angeordnet sind und der Abstand im Kompensationsbereich zwischen den Kontakten (1, 3 bzw. 2, 4) verschiedener Kontaktpaare kleiner als der Abstand der Kontakte (1, 2 bzw. 3, 4) eines Kontaktpaares (1, 2; 3, 4) ist.

3. Anordnung nach Anspruch 1, dadurch gekennzeichnet, daß die Kontakte (13, 16 bzw. 14, 15) eines Kontaktpaares (13, 16; 14, 15) im Kontaktbereich (5) symmetrisch ineinander verschachtelt angeordnet sind und im Kompensationsbereich die zwischen den Kontakten (13, 16 und 14, 15) aufgespannten Ebenen einen Winkel $\alpha < 90°$ einschließen.

4. Anordnung nach einem der Ansprüche 1 bis 3, dadurch gekennzeichnet, daß die Kontakte (1, 2 bzw. 3, 4) eines jeden Kontaktpaares (1, 2; 3, 4) vom Kontaktbereich (5) in entgegengesetzten Richtungen weitergeführt und daran anschließend in gleicher Richtung abgewinkelt ausgebildet sind.

5. Anordnung nach einem der Ansprüche 1 bis 3, dadurch gekennzeichnet, daß die Kontakte (1, 2 bzw. 3, 4) eines jeden Kontaktpaares im Kontaktbereich (5) gleichsinnig und parallel ausgebildet sind.

6. Anordnung nach einem der Ansprüche 1 bis 3, dadurch gekennzeichnet, daß die Kontakte (1, 2 bzw. 3, 4) eines Kontaktpaares (1, 2; 3, 4) im Kontaktbereich (5) parallel und gegensinnig zueinander ausgebildet sind.

7. Anordnung nach einem der Ansprüche 1 bis 6, dadurch gekennzeichnet, daß die Kontakte (1, 2, 3, 4) mindestens teilweise abgeflacht ausgebildet sind.

8. Anordnung nach einem der vorangegangenen Ansprüche, dadurch gekennzeichnet, daß die Kontakte (1, 3 oder 2, 4) im Anschluß an die gleichgerichtete Weiterführung zu den zugehörigen Kontakten (2, 4 oder 1, 3) eines jeden Kontaktpaares (1, 2; 3, 4;) abgewinkelt ausgebildet sind, so daß der geringere Abstand zwischen den Kontakten (2, 3) ein zum Kontaktbereich (5) gleichphasiges Übersprechen erzeugt.

9. Anordnung nach einem der vorangegangenen Ansprüche, dadurch gekennzeichnet, daß zur Begrenzung des Kompensationsbereiches (6, 7) die Kontakte (1, 2, 3, 4) in einer entkoppelten Lage zueinander weitergeführt sind oder zwischen den Kontaktpaaren (1,2; 3,4) eine Schirmung angeordnet ist.

10. Anordnung nach einem der vorangegangenen Ansprüche für die Buchse einer Steckverbindung mit vier Kontaktpaaren, deren innere Kontaktpaare ineinander verschachtelt sind, dadurch gekennzeichnet, daß die zugehörigen Kontakte (13, 16 bzw. 14, 15) der inneren Kontaktpaare (13, 16; 14, 15) im Kontaktbereich (5) parallel und gegensinnig zueinander angeordnet sind und im Anschluß an den Kontaktbereich (5) schleifenförmig zueinander geführt sind.

11. Anordnung nach Anspruch 10, dadurch gekennzeichnet, daß die Kontakte (11, 12) des ersten äußeren Kontaktpaares (11, 12) zueinander durchgehend parallel angeordnet sind, wobei der Kontakt (12) zum nächstbenachbarten Kontakt (13) der inneren Kontaktpaare (13, 16; 14, 15) im Kontaktbereich (5) parallel und gegensinnig geführt ist.

12. Anordnung nach Anspruch 11, dadurch gekennzeichnet, daß die Kontakte (17, 18) des zweiten äußeren Kontaktpaares (17, 18) zueinander durchgehend parallel angeordnet sind, wobei der Kontakt (17) zum nächstbenachbarten Kontakt (16) der inneren Kontaktpaare (13, 16; 14, 15) im Kontaktbereich (5) parallel und gegensinnig geführt ist.

13. Anordnung nach Anspruch 12, dadurch gekennzeichnet, daß die beiden äußeren Kontakpaare (11, 12; 17, 18) im Anschlußbereich auf einer magnetischen Feldlinie der inneren Kontaktpaare (13, 16; 14, 15) angeordnet sind.

14. Anordnung von Kontaktpaaren eines Steckers für eine Buchse nach einem der Ansprüche 10 bis 13, dadurch gekennzeichnet, daß die Kontakte (15, 16 bzw, 13, 14) über den Kontaktbereich (5) hinaus parallel geführt sind und anschließend die Kontakte (14, 15) des einen Kontaktpaares (14, 15) zweifach derart abgewinkelt sind, daß die Kontaktpaare (13, 16; 14, 15) sich in einer nahezu entkoppelten Lage zueinander befinden oder mittels eines zwischen den Kontaktpaaren (13, 16; 14, 15) angeordneten Schirmbleches (19) voneinander entkoppelt sind.

15. Anordnung nach Anspruch 14, dadurch gekennzeichnet, daß die Kontakte (11, 12) des ersten äußeren Kontaktpaares (11, 12) durchgehend zueinander parallel ausgebildet sind, wobei der Kontakt (12) zum nächstbenachbarten Kontakt (14) der inneren Kontaktpaare (13, 16; 14, 15) im Kontaktbereich (5) parallel und gegensinnig angeordnet ist.

16. Anordnung nach Anspruch 15, dadurch gekennzeichnet, daß die Kontakte (17, 18) des zweiten äußeren Kontaktpaares (17, 18) im Kontaktbereich (5) parallel und gegensinnig zueinander angeordnet sind und daran anschließend in Form einer Kompensationsschleife weitergeführt sind, wobei der Kontakt (18) gleichsinnig zu Kontakt (16) im Kontaktbereich (5) und im Bereich der Kompensationsschleife parallel angeordnet ist.

17. Anordnung nach Anspruch 16, dadurch gekennzeichnet, daß im Anschlußbereich ein Schirmblech (19) angeordnet ist, oberhalb dessen das erste innere Kontaktpaar (13, 16) und unterhalb die Kontaktpaare (11, 12; 14, 15; 17, 18) angeordnet sind, wobei die unteren Kontaktpaare (11, 12; 14, 15; 17, 18) jeweils auf einer Äquipotentialfläche der übrigen Kontaktpaare angeordnet sind.

FIG.1

FIG.2

FIG.3

FIG.4

# FIG.5

# FIG.7a

# FIG.7b

# FIG.6

# FIG.8

# FIG.9

# FIG.10

# FIG.11

# FIG.12

# FIG.13

# FIG.14

# FIG.15

# FIG.16

# FIG.17

# FIG.18